# EUROPEAN PATENT APPLICATION

(11) **EP 4 760 957 A1**
(43) Date of publication of application: **17.06.2026**
(21) Application number: 24851408.5
(22) Date of filing: 18.06.2024
(51) Int. Cl.: H01M 50/50, H01M 50/209, H01M 50/298, H01M 50/503, H01M 50/507

(54) **BATTERY PACK**

(30) Priority: 08.08.2023 JP 2023129563
(71) Applicant: Vehicle Energy Japan Inc., Hitachinaka-shi, Ibaraki 312-8505 (JP)
(72) Inventor: SUZUKI Takashi, Hitachinaka-shi, Ibaraki 312-8505 (JP); SENGOKU Eisuke, Hitachinaka-shi, Ibaraki 312-8505 (JP)
(74) Representative: MERH-IP Matias Erny Reichl Hoffmann Patentanwälte PartG mbB
(86) International application number: PCT/JP2024/022057
(87) International publication number: WO 2025/032975

(57) **Abstract**

A battery pack (1) has a cell (100), a bus bar (inter-cell bus bar 302), a harness (400A) that includes a terminal (401) connected to the inter-cell bus bar (302) and an electrical wire (402), and a holding member (bus bar holder 311) that holds the inter-cell bus bar (302). The bus bar holder (311) includes a base portion (311M) and a projecting portion (311N). The harness (400A) includes a first connection portion (400P) in which the inter-cell bus bar (302) and the terminal (401) are connected to each other and a second connection portion (400Q) in which the terminal (401) and the electrical wire (402) are connected to each other. The projecting portion (311N) includes a first wall portion (311d) adjacent to the first connection portion (400P) and a second wall portion (311e) adjacent to the second connection portion (400Q). The first wall portion (311d) and the second wall portion (311e) are adjacent to the harness (400A). The second wall portion (311e) includes a portion extending beyond than the second connection portion (400Q) in a direction away from the cell (100).

## Description

### Technical Field

The present invention relates to a battery pack.

### Background Art

Conventionally, there has been known a battery pack having a bus bar (conductor), a harness connected to the bus bar, and a holding member (resin plate) that holds the bus bar and the harness. The harness includes a terminal (voltage sensing terminal) connected to the bus bar and an electrical wire connected to the terminal (for example, refer to Patent Document 1).

### Prior Art Document

### Patent Document

Patent Document 1: JP-2014-107161-A

### Summary of the Invention

### Problem to be Solved by the Invention

A battery pack that allows sufficient protection of a harness connected to a bus bar is demanded.

### Means for Solving the Problem

A battery pack according to an embodiment of the present invention has a plurality of cells each including electrode terminals, a bus bar that is connected to one of the electrode terminals of one of the cells and one of the electrode terminals of another one of the cells or is connected to one of the electrode terminals of one of the cells and external electrical equipment, a harness that includes a terminal connected to the bus bar and an electrical wire connected to the terminal, and a holding member that holds the bus bar. The holding member includes a base portion that is located between the cell and the bus bar and extends along the plurality of cells and a projecting portion that is continuous with the base portion and extends in a direction away from the cell. The harness includes a first connection portion in which the bus bar and the terminal are connected to each other and a second connection portion in which the terminal and the electrical wire are connected to each other, the second connection portion being continuous with the first connection portion. The projecting portion includes a first wall portion adjacent to the first connection portion along a direction intersecting the direction away from the cell and a second wall portion adjacent to the second connection portion along the direction intersecting the direction away from the cell. The first wall portion and the second wall portion are adjacent to any one or more of a plurality of the harnesses. The second wall portion includes a portion extending beyond the second connection portion in the direction away from the cell.

### Advantages of the Invention

The battery pack in which the harness connected to the bus bar is sufficiently protected can be obtained.

### Brief Description of the Drawings

[Fig. 1] Fig. 1 is a perspective view depicting a battery pack 1 according to an embodiment.
[Fig. 2] Fig. 2 is a perspective view depicting a state in which a bus bar cover 312 is removed from the battery pack 1 of Fig. 1.
[Fig. 3] Fig. 3 is a top view depicting a state in which the bus bar cover 312 and a bus bar holder 311 are removed from the battery pack 1 of Fig. 1.
[Fig. 4] Fig. 4 is a perspective view depicting a major part of the battery pack 1.
[Fig. 5] Fig. 5 is a side view depicting the major part of the battery pack 1.
[Fig. 6] Fig. 6 is an enlarged perspective view depicting the major part of the battery pack 1 of Fig. 4 in a partly see-through manner.
[Fig. 7] Fig. 7 is an enlarged side view depicting the major part of the battery pack 1 of Fig. 5 in a partly see-through manner.
[Fig. 8] Fig. 8 is a top view depicting the major part of the battery pack 1.
[Fig. 9] Fig. 9 is an exploded view depicting the major part of the battery pack 1.
[Fig. 10] Fig. 10 is a perspective view depicting the bus bar holder 311 over which a plurality of electrical wires 402 are bundled and routed.
[Fig. 11] Fig. 11 is a perspective view depicting the bus bar holder 311 over which one electrical wire is located also on the side of an inter-cell bus bar 302 relative to the tip of an upper surface 311e1 of a second wall portion 311e.
[Fig. 12] Fig. 12 is a side view depicting a major part of a battery pack according to a modification 1 of the embodiment.
[Fig. 13] Fig. 13 is a perspective view depicting a major part of a battery pack according to a modification 2 of the embodiment.
[Fig. 14] Fig. 14 is a perspective view depicting a major part of a battery pack according to a modification 3 of the embodiment.
[Fig. 15] Fig. 15 is a perspective view depicting a major part of a battery pack according to a modification 4 of the embodiment.
[Fig. 16] Fig. 16 is a perspective view depicting a major part of a battery pack according to a modification 5 of the embodiment.
[Fig. 17] Fig. 17 is a perspective view depicting a major part of a battery pack according to a modification 6 of the embodiment.
[Fig. 18] Fig. 18 is a perspective view depicting a major part of a battery pack according to a modification 7 of the embodiment.
[Fig. 19] Fig. 19 is a perspective view depicting a plurality of cells 100 and a holding unit 200 in a state in which some of constituent components of the holding unit 200 are disassembled in a width direction Y and a stacking direction X.
[Fig. 20] Fig. 20 is a perspective view depicting a state in which a first side plate 231, a second side plate 232, and fastening bolts 241 are removed from Fig. 19 and the cells 100 and the constituent components of the holding unit 200 are disassembled in the stacking direction X.
[Fig. 21]

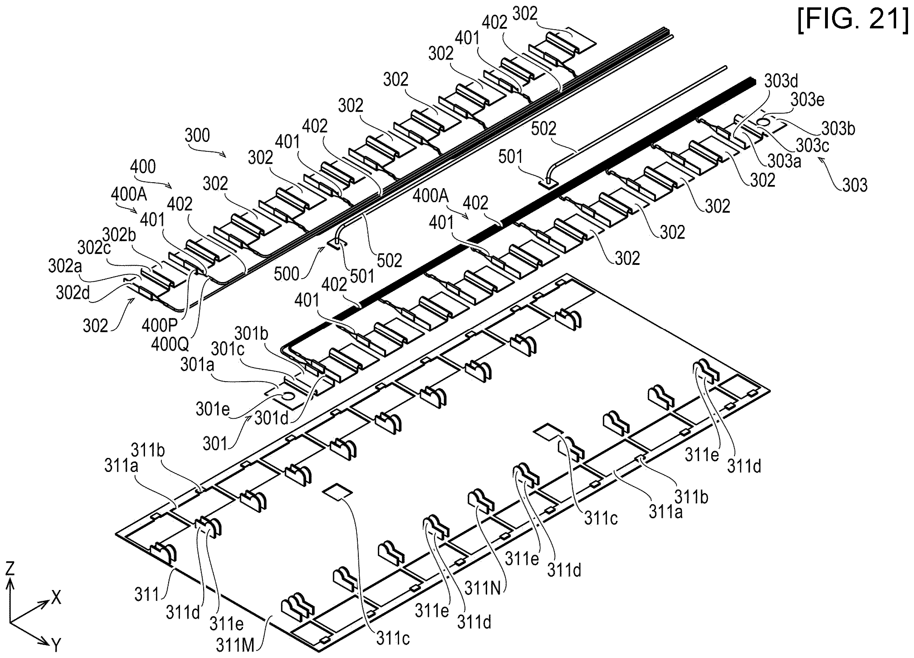

   Fig. 21 is a perspective view depicting a bus bar unit 300, a voltage sensing unit 400, and a temperature measurement unit 500.

### Mode for Carrying Out the Invention

An embodiment for carrying out the present invention is described with reference to the drawings. In order to facilitate understanding of the embodiment, the size or ratio of a constituent component is exaggerated in some cases in each drawing. In the respective drawings, the same constituent components are given the same reference characters. In each drawing, a stacking direction X, a width direction Y, and a height direction Z of a battery pack 1 are indicated by arrows. It is to be noted that, in each drawing, the stacking direction X, the width direction Y, and the height direction Z of the battery pack 1 indicate a relative positional relation in the same drawing. That is, the stacking direction X, the width direction Y, and the height direction Z of the battery pack 1 change when the battery pack 1 is rotated by 180 degrees and its upper surface and lower surface are disposed in a reversed manner or when the battery pack 1 is rotated by 90 degrees and the upper surface is disposed as a side surface. In each drawing, illustrations of threads in outer circumferential surfaces of fastening bolts and grooves in inner circumferential surfaces of insert nuts are omitted.

### (Configuration of Battery Pack 1 According to Embodiment)

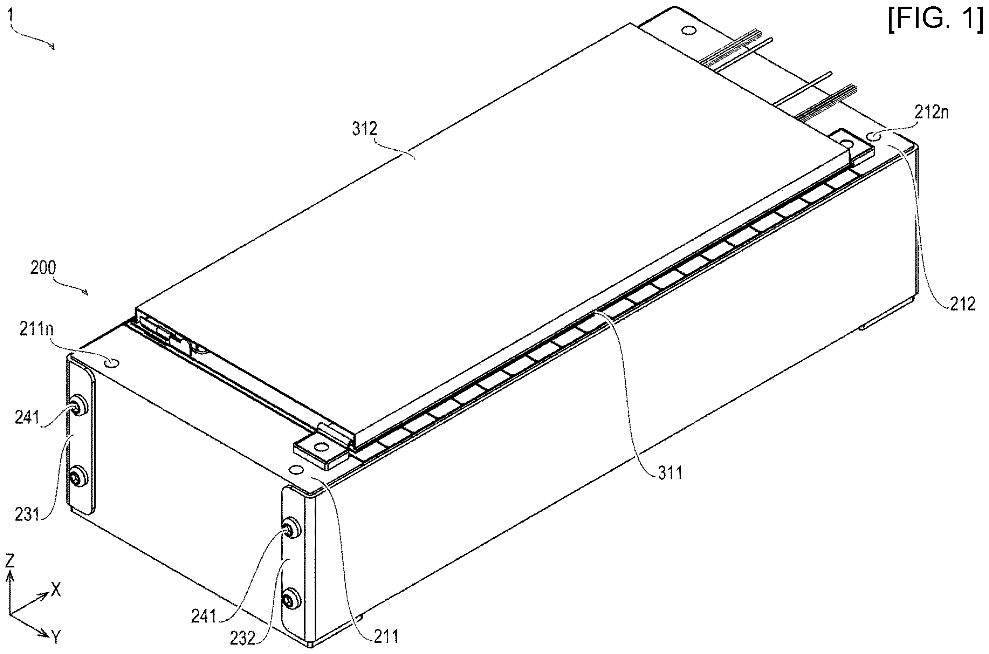

A configuration of the battery pack 1 according to the embodiment is described with reference to Figs. 1 to 21.

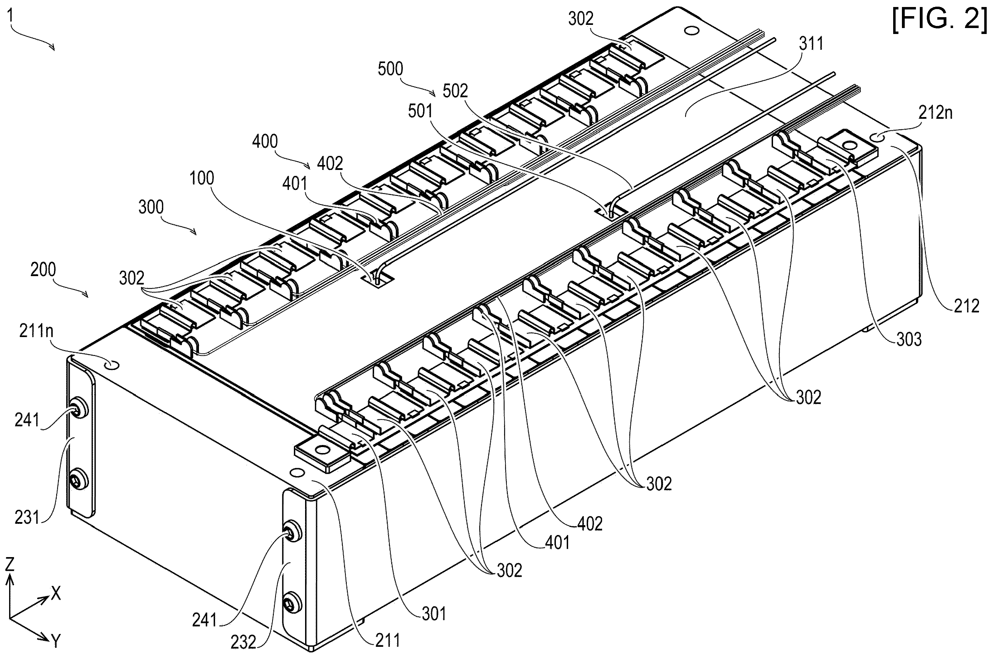

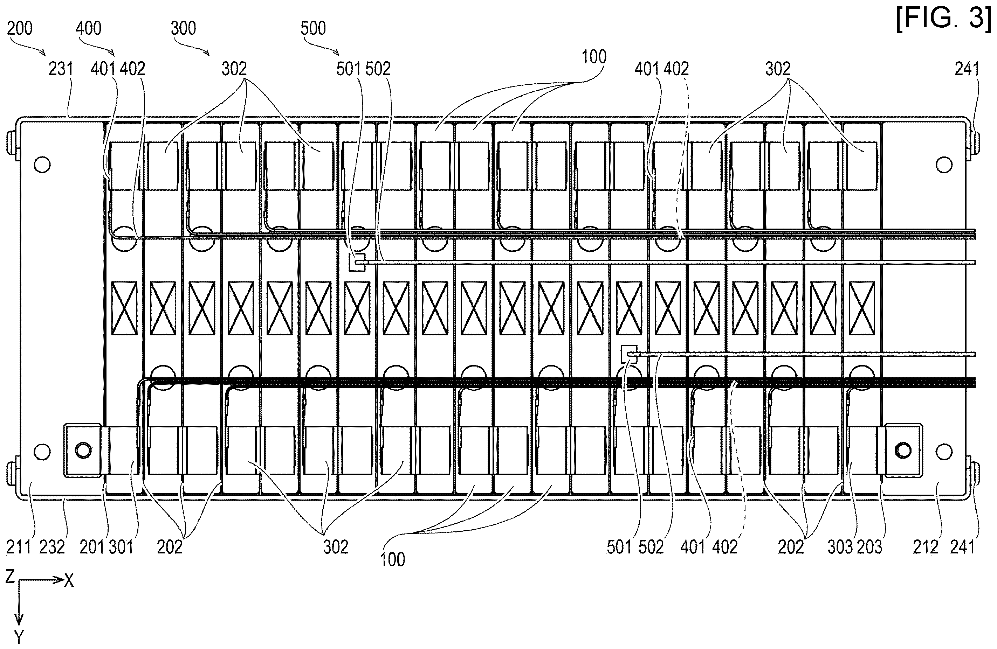

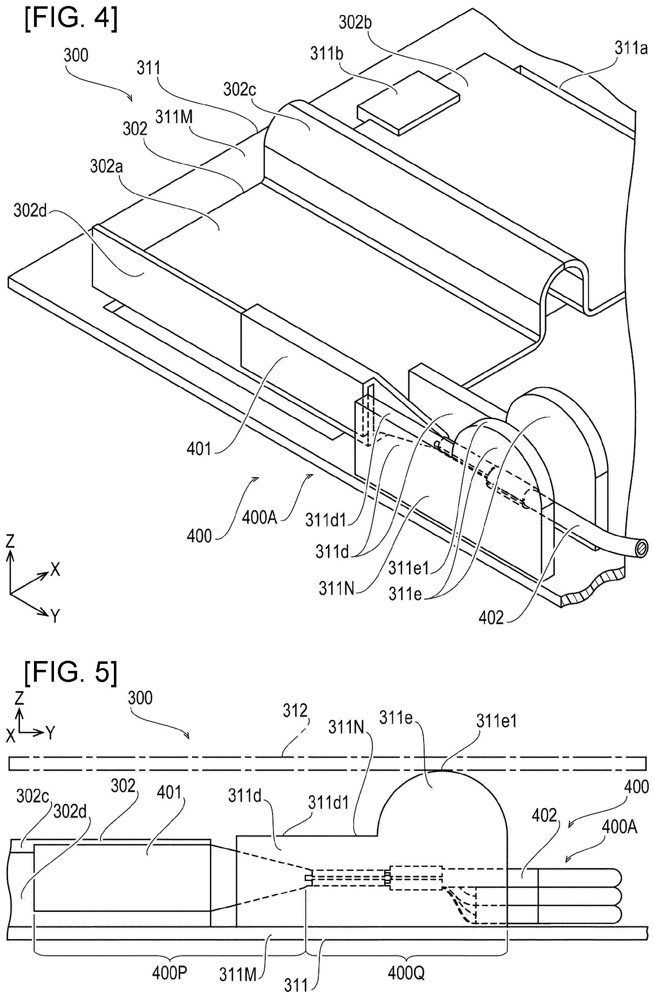

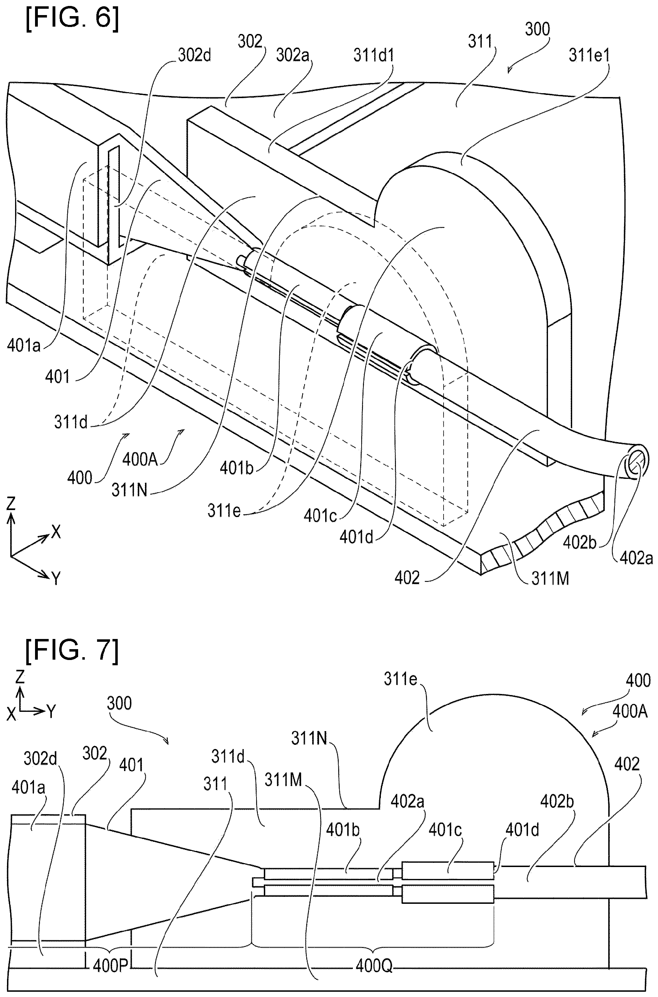

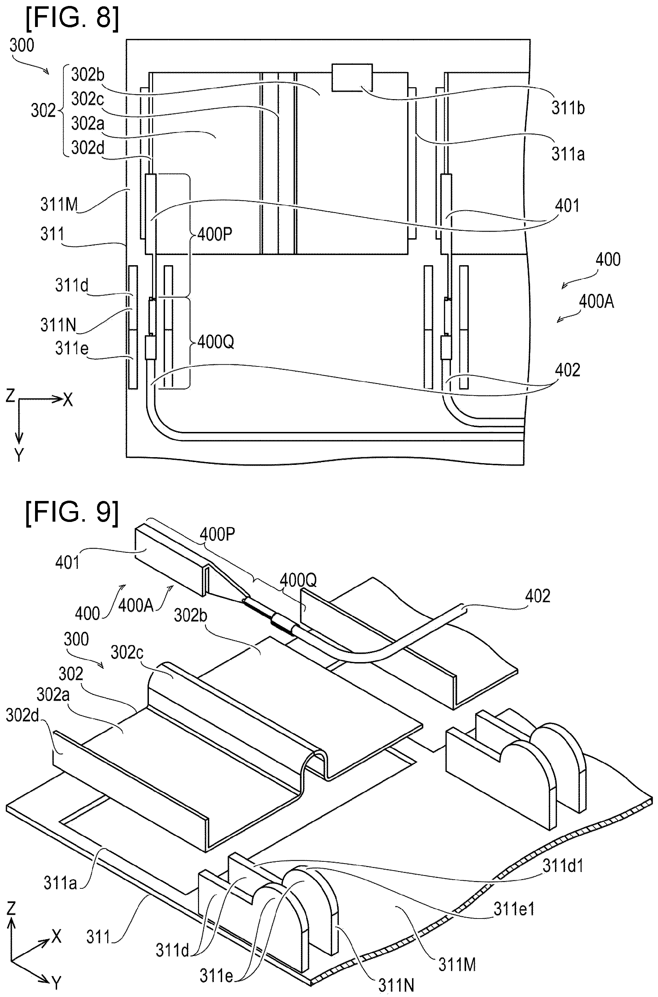

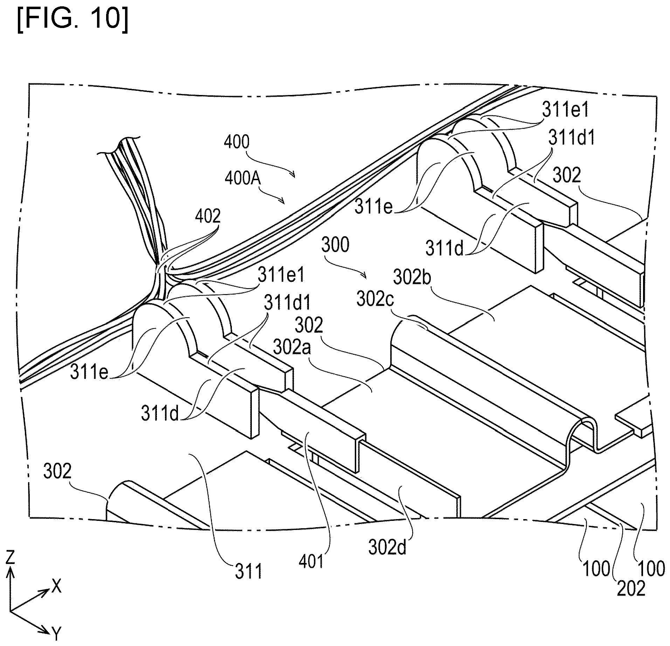

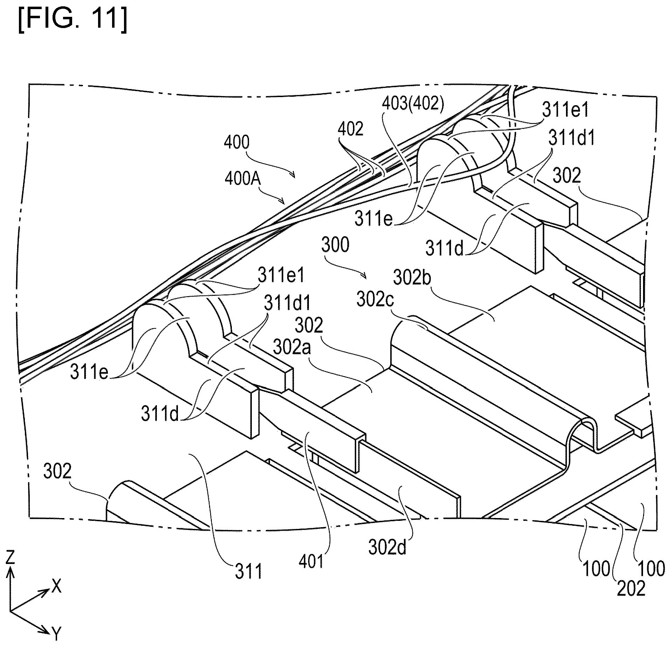

Fig. 1 is a perspective view depicting the battery pack 1 according to the embodiment. Fig. 2 is a perspective view depicting a state in which a bus bar cover 312 is removed from the battery pack 1 of Fig. 1. Fig. 3 is a top view depicting a state in which the bus bar cover 312 and a bus bar holder 311 are removed from the battery pack 1 of Fig. 1. Fig. 4 is a perspective view depicting a major part of the battery pack 1. Fig. 5 is a side view depicting the major part of the battery pack 1. Fig. 6 is an enlarged perspective view depicting the major part of the battery pack 1 of Fig. 4 in a partly see-through manner. Fig. 7 is an enlarged side view depicting the major part of the battery pack 1 of Fig. 5 in a partly see-through manner. Fig. 8 is a top view depicting the major part of the battery pack 1. Fig. 9 is an exploded view depicting the major part of the battery pack 1. Fig. 10 is a perspective view depicting the bus bar holder 311 over which a plurality of electrical wires 402 are bundled and routed. Fig. 11 is a perspective view depicting the bus bar holder 311 over which one electrical wire is located also on the side of an inter-cell bus bar 302 relative to the tip of an upper surface 311e1 of a second wall portion 311e.

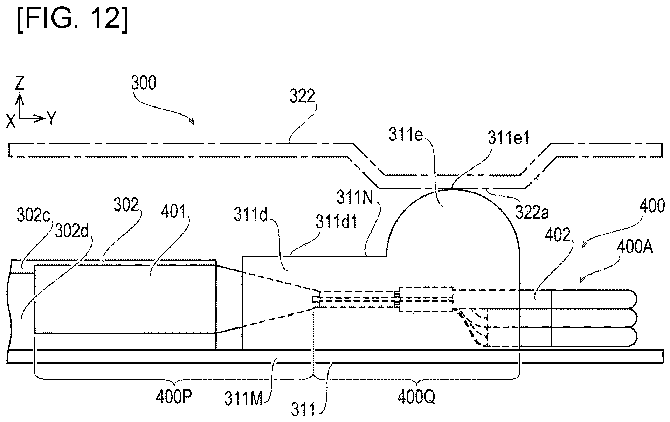

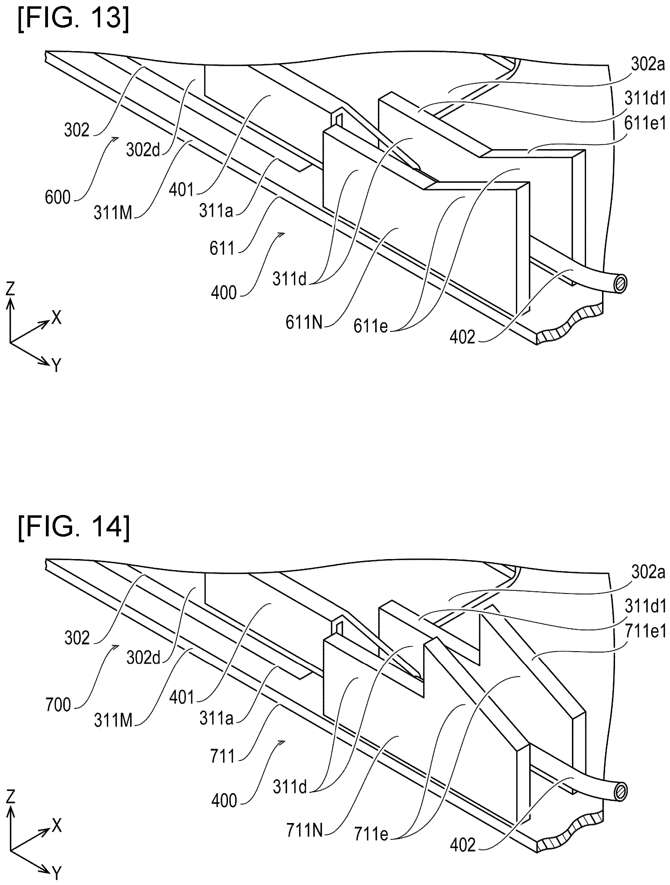

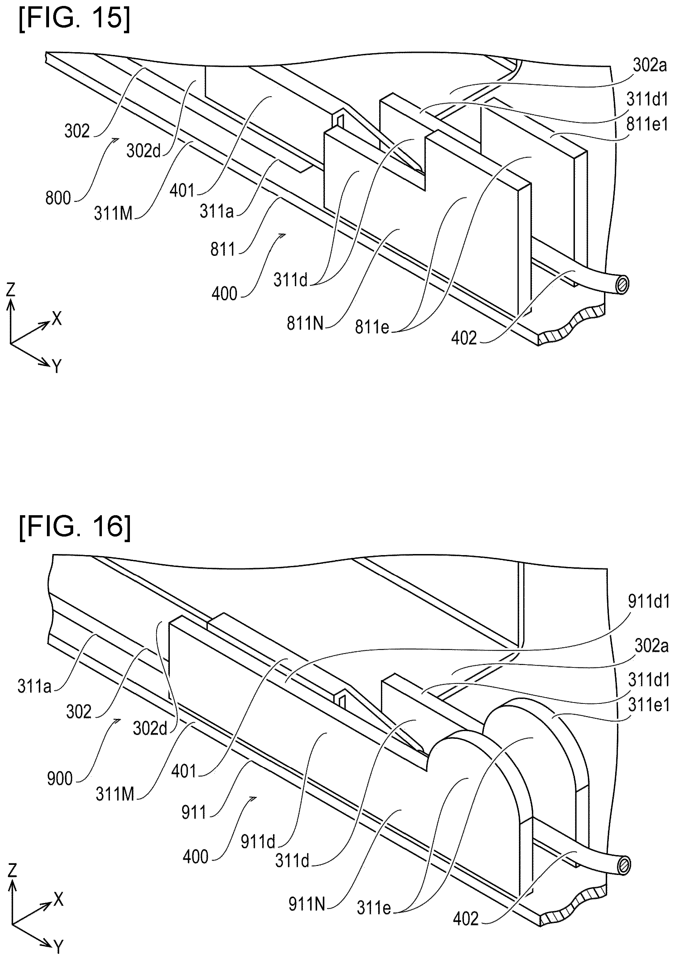

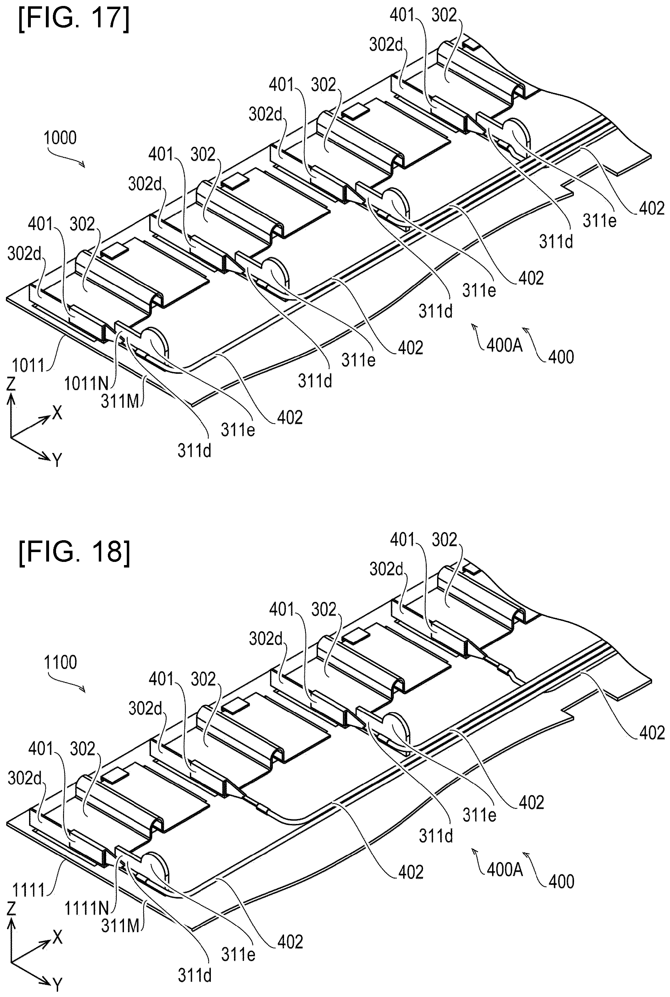

Fig. 12 is a side view depicting a major part of a battery pack according to a modification 1 of the embodiment. Fig. 13 is a perspective view depicting a major part of a battery pack according to a modification 2 of the embodiment. Fig. 14 is a perspective view depicting a major part of a battery pack according to a modification 3 of the embodiment. Fig. 15 is a perspective view depicting a major part of a battery pack according to a modification 4 of the embodiment. Fig. 16 is a perspective view depicting a major part of a battery pack according to a modification 5 of the embodiment. Fig. 17 is a perspective view depicting a major part of a battery pack according to a modification 6 of the embodiment. Fig. 18 is a perspective view depicting a major part of a battery pack according to a modification 7 of the embodiment.

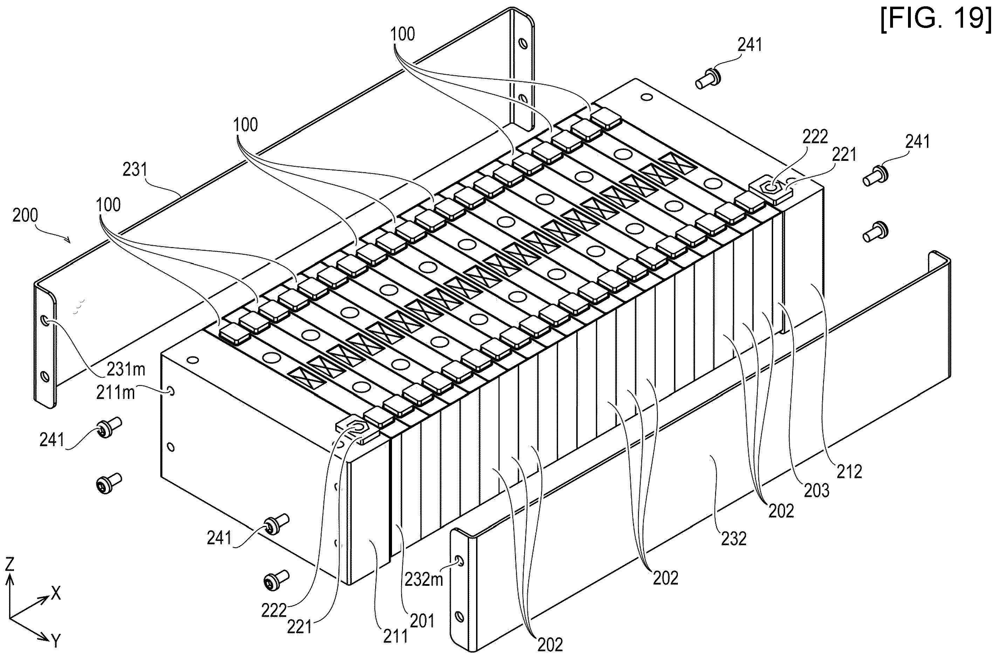

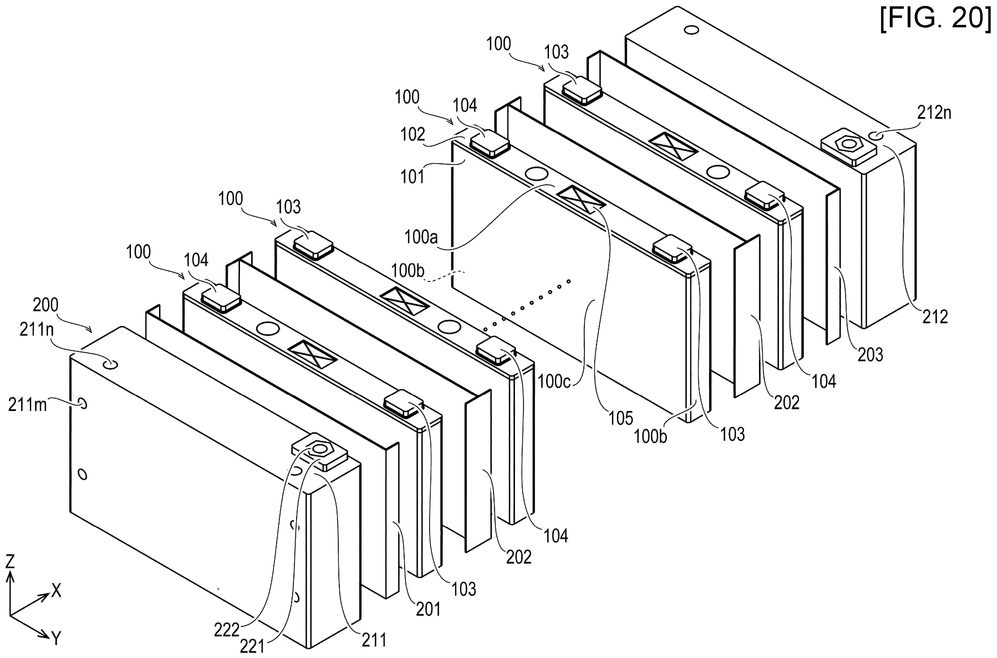

Fig. 19 is a perspective view depicting a plurality of cells 100 and a holding unit 200 in a state in which some of constituent components of the holding unit 200 are disassembled in the width direction Y and the stacking direction X concerning. Fig. 20 is a perspective view depicting a state in which a first side plate 231, a second side plate 232, and fastening bolts 241 are removed from Fig. 19 and the cells 100 and the constituent components of the holding unit 200 are disassembled in the stacking direction X. Fig. 21 is a perspective view depicting a bus bar unit 300, a voltage sensing unit 400, and a temperature measurement unit 500.

For example, the battery pack 1 is configured as a power supply for actuating a motor for causing a vehicle to travel. For example, the battery pack 1 may be configured as a power supply for actuating electrical equipment mounted in a vehicle.

As depicted in Figs. 1 and 2, the battery pack 1 includes the plurality of cells 100, the holding unit 200 that holds the plurality of cells 100, and the bus bar unit 300 that electrically connects the plurality of cells 100 to one another. Further, the battery pack 1 includes the voltage sensing unit 400 that senses the voltage of the cell 100 and the temperature measurement unit 500 that measures the temperature of the cells 100. The constituent components included in the battery pack 1 are described below.

### (Configuration of Cell 100)

The cells 100 depicted in Figs. 2, 3, 19, and 20 are stacked on top of each other along the stacking direction X with the interposition of the holding unit 200. For example, twenty cells 100 are stacked on top of each other as depicted in Fig. 3. Each of the cells 100 is configured by, for example, a lithium-ion secondary battery. The cell 100 contains a current collector and an electrolytic solution. As depicted in Fig. 20, the cell 100 includes a container 101, a lid 102, a positive electrode terminal 103 (electrode terminal), a negative electrode terminal 104 (electrode terminal), and a safety valve 105. The constituent components included in the cell 100 are described below.

As depicted in Fig. 20, the cell 100 is formed into a rectangular parallelepiped shape. The positive electrode terminal 103 and the negative electrode terminal 104 are disposed on an upper surface 100a of the cell 100 which extends along the stacking direction X. In Fig. 20, the upper surface 100a corresponds to the upper surface of the cell 100. The upper surface 100a is formed into a rectangular shape. The length of the upper surface 100a along the width direction Y of the cell 100 is longer than the length thereof along the stacking direction X of the cell 100. The upper surfaces 100a are facing the bus bar unit 300 depicted in Fig. 2. Two side surfaces 100b of the cell 100 which extend along the stacking direction X are orthogonal to the upper surface 100a and are facing each other. The side surface 100b is formed into a rectangular shape. The length of the side surface 100b along the height direction Z of the cell 100 is longer than the length thereof along the stacking direction X of the cell 100. Two main surfaces 100c of the cell 100 facing each other in the stacking direction X are in contact with a cell spacer 202 and the like of the holding unit 200.

The current collector of the cell 100 corresponds to a charge/discharge body to and from which electric power is input and output. The current collector of the cell 100 is formed by winding or stacking of a positive electrode and a negative electrode with the interposition of a separator. The current collector and the electrolytic solution are housed in the container 101. The container 101 housing the current collector and the electrolytic solution therein is sealed with the lid 102. The lid 102 is joined to the container 101. The positive electrode terminal 103 and the negative electrode terminal 104 relay input and output of electric power between the current collector and the electrical equipment. The positive electrode terminal 103 and the negative electrode terminal 104 are attached to the lid 102. The positive electrode terminal 103 of one of the cells 100 adjacent to each other along the stacking direction X is facing the negative electrode terminal 104 of the other cell 100 in the stacking direction X as depicted in Fig. 20. The safety valve 105 cleaves toward the outside of the cell 100 when the internal pressure of the cell 100 exceeds a predetermined value. The safety valve 105 is also referred to as a cleavage valve. The safety valve 105 is disposed, for example, in the lid 102.

### (Configuration of Holding Unit 200)

The holding unit 200 holds the plurality of cells 100 as depicted in Figs. 1 to 3, 19, and 20. As depicted in Figs. 3, 19, and 20, the holding unit 200 includes a first end spacer 201, the cell spacers 202, and a second end spacer 203. In addition, the holding unit 200 includes a first end block 211, a second end block 212, insulating members 221, and insert nuts 222. Moreover, the holding unit 200 includes the first side plate 231, the second side plate 232, and the fastening bolts 241. The constituent components included in the holding unit 200 are described below.

As depicted in Fig. 20, the first end spacer 201 is disposed between the first end block 211 and the cell 100. The first end spacer 201 is in contact with a first cell 100 that is one of the stacked twenty cells 100 and that is located on one end side. This cell 100 corresponds to the cell 100 located at the left end in Fig. 3. The first end spacer 201 insulates the cell 100 from the first end block 211. The first end spacer 201 covers each of side surfaces of the first end block 211 and the cell 100 which extend along the width direction Y. The first end spacer 201 covers part of each of the side surfaces 100b of the cell 100 which extend along the stacking direction X. The thickness of the first end spacer 201 along the stacking direction X is sufficiently thinner than the thickness of the cell 100 along the stacking direction X. The first end spacer 201 is formed of an insulating material.

As depicted in Fig. 20, the cell spacer 202 is disposed between the cells 100 adjacent to each other. The cell spacer 202 holds and insulates the cells 100 adjacent to each other. The cell spacer 202 covers each of the main surfaces 100c, which extend along the width direction Y, of the cells 100 adjacent to each other and also covers part of each of the side surfaces 100b, which extend along the stacking direction X, of the cells 100 adjacent to each other. The thickness of the cell spacer 202 along the stacking direction X is sufficiently thinner than the thickness of the cell 100 along the stacking direction X. The cell spacer 202 is formed of an insulating material.

As depicted in Fig. 20, the second end spacer 203 is disposed between the cell 100 and the second end block 212. The second end spacer 203 is in contact with a twentieth cell 100 that is one of the stacked twenty cells 100 and that is located on the other end side. This cell 100 corresponds to the cell 100 located at the right end in Fig. 3. The second end spacer 203 insulates the cell 100 from the second end block 212. The second end spacer 203 covers each of side surfaces of the second end block 212 and the cell 100 which extend along the width direction Y. The second end spacer 203 covers part of each of the side surfaces 100b of the cell 100 which extend along the stacking direction X. The thickness of the second end spacer 203 along the stacking direction X is sufficiently thinner than the thickness of the cell 100 along the stacking direction X. The second end spacer 203 is formed of an insulating material.

As depicted in Fig. 20, the first end block 211 is stacked on the first cell 100, which is one of the stacked twenty cells 100 and is located on the one end side, with the interposition of the first end spacer 201. The first end block 211 extends along the width direction Y intersecting the stacking direction X of the cell 100. The first end block 211 is adjacent to the cell 100 located at the end along the stacking direction X and supports the cell 100. The first end block 211 is formed into a rectangular parallelepiped shape extending in the width direction Y. As depicted in Fig. 19, the first end block 211 has a side surface extending along the width direction Y with a plurality of screw holes 211m formed therein, and the fastening bolts 241 are screwed into the respective screw holes 211m. As depicted in Fig. 2, the first end block 211 is fixed to the first side plate 231 by the fastening bolts 241. Similarly, the first end block 211 is fixed to the second side plate 232 by the fastening bolts 241. In the first end block 211, insertion holes 211n into which bolts or the like are to be inserted for fixing of the battery pack 1 are formed. The first end block 211 is formed of, for example, metal or resin.

As depicted in Fig. 20, the second end block 212 is stacked on the twentieth cell 100, which is one of the stacked twenty cells 100 and is located on the other end side, with the interposition of the second end spacer 203. The second end block 212 extends along the width direction Y of the cell 100. The second end block 212 is adjacent to the cell 100 located at the end along the stacking direction X and supports the cell 100. The second end block 212 is formed into a rectangular parallelepiped shape extending in the width direction Y. As depicted in Fig. 19, the second end block 212 has a side surface extending along the width direction Y with a plurality of screw holes formed therein, and the fastening bolts 241 are screwed into the respective screw holes. As depicted in Fig. 2, the second end block 212 is fixed to the first side plate 231 by the fastening bolts 241. Similarly, the second end block 212 is fixed to the second side plate 232 by the fastening bolts 241. In the second end block 212, insertion holes 212n into which bolts or the like are to be inserted for fixing of the battery pack 1 are formed. The second end block 212 is formed of, for example, metal or resin.

As depicted in Fig. 20, the insulating member 221 is inserted into the first end block 211. Further, the insulating member 221 is inserted into the second end block 212. The insulating member 221 is formed into, for example, a rectangular parallelepiped shape. The insulating member 221 is formed of an insulating material.

The insulating member 221 may have the following configuration. Specifically, the insulating member 221 may be formed integrally with the first end spacer 201 or may be formed separately from the first end spacer 201 and then joined to the first end spacer 201. In such a case, a hollow for housing therein the insulating member 221 along the stacking direction X is made in a surface of the first end block 211 which faces the first end spacer 201. Similarly, the insulating member 221 may be formed integrally with the second end spacer 203 or may be formed separately from the second end spacer 203 and then joined to the second end spacer 203. In such a case, a hollow for housing therein the insulating member 221 along the stacking direction X is made in a surface of the second end block 212 which faces the second end spacer 203.

As depicted in Fig. 19, the insert nuts 222 are embedded in hollows formed in upper surfaces of the insulating members 221. For example, a fastening bolt is secured to the insert nut 222 with the interposition of a bus bar which is electrically connected to external control equipment.

As depicted in Fig. 2, the first side plate 231 extending along the stacking direction X of the plurality of stacked cells is disposed at one end in the width direction Y of the plurality of cells 100. The first side plate 231 holds the plurality of cells 100 along the stacking direction X. Opposite ends of the first side plate 231 extending along the stacking direction X bend toward the width direction Y. As depicted in Fig. 19, a plurality of insertion holes 231m are formed in side surfaces of the first side plate 231 which extend along the width direction Y, and the fastening bolts 241 are inserted into the respective insertion holes 231m. As depicted in Fig. 2, the first side plate 231 is fixed to the first end block 211 and the second end block 212 by the fastening bolts 241.

As depicted in Fig. 2, the second side plate 232 extending along the stacking direction X of the plurality of stacked cells 100 is disposed at the other end in the width direction Y of the plurality of cells 100. The second side plate 232 holds the plurality of cells 100 along the stacking direction X. Opposite ends of the second side plate 232 extending along the stacking direction X bend toward the width direction Y. As depicted in Fig. 19, a plurality of insertion holes 232m are formed in side surfaces of the second side plate 232 which extend along the width direction Y, and the fastening bolts 241 are inserted into the respective insertion holes 232m. As depicted in Fig. 2, the second side plate 232 is fixed to the first end block 211 and the second end block 212 by the fastening bolts 241.

As depicted in Fig. 3, the fastening bolts 241 fasten the first side plate 231 to the first end block 211 and fasten the first side plate 231 to the second end block 212. Moreover, as depicted in Fig. 3, the fastening bolts 241 fasten the second side plate 232 to the first end block 211 and fasten the second side plate 232 to the second end block 212.

### (Configuration of Bus Bar Unit 300)

The bus bar unit 300 depicted in Figs. 1 to 18 and 21 electrically connects the plurality of cells 100 to one another. As depicted in Figs. 2, 3, and 21, the bus bar unit 300 includes a first end bus bar 301, a plurality of inter-cell bus bars 302, a second end bus bar 303, the bus bar holder 311 (holding member), and the bus bar cover 312 (covering member). The constituent components included in the bus bar unit 300 are described below.

### (First End Bus Bar 301: Bus Bar)

The first end bus bar 301 is a bus bar. The first end bus bar 301 is connected to the positive electrode terminal 103 of one cell 100 and is also connected to electrical equipment electrically connected to external control equipment. The electrical equipment is, for example, a bus bar disposed in an electric vehicle. As depicted in Fig. 3, the first end bus bar 301 is joined to the positive electrode terminal 103 of the cell 100 that is one of the twenty stacked cells 100 and that is closest to the first end block 211. As depicted in Fig. 21, the first end bus bar 301 includes a first joined portion 301a with a plate shape, a second joined portion 301b with a plate shape, a coupling portion 301c with a curved shape, a protruding portion 301d, and an insertion hole 301e.

To the first joined portion 301a of the first end bus bar 301, the electrical equipment (bus bar) electrically connected to the external control equipment is joined. The second joined portion 301b is joined to the positive electrode terminal 103 of the cell 100. The coupling portion 301c couples the first joined portion 301a and the second joined portion 301b.

As depicted in Fig. 21, the protruding portion 301d of the first end bus bar 301 is formed at an edge of the second joined portion 301b. The protruding portion 301d extends in a direction away from the cell 100. The direction away from the cell 100 corresponds to such a direction as to get farther away from the cell 100 in the height direction Z. The protruding portion 301d is formed into a plate shape. The protruding portion 301d is formed monolithically with the second joined portion 301b.

As depicted in Fig. 21, the insertion hole 301e of the first end bus bar 301 is formed in the first joined portion 301a. A fastening bolt is inserted into the insertion hole 301e. The first joined portion 301a is joined by the fastening bolt to the electrical equipment (bus bar) electrically connected to the external control equipment.

The first end bus bar 301 is formed of, for example, aluminum. When the first end bus bar 301 is formed of a clad material, for example, the first joined portion 301a is formed of copper, and the second joined portion 301b and the protruding portion 301d are formed of aluminum. The protruding portion 301d is connected to a terminal 401 of the voltage sensing unit 400. The first end bus bar 301 is formed of, for example, aluminum. When the first end bus bar 301 is formed of a clad material, for example, the first joined portion 301a is formed of copper, and the second joined portion 301b is formed of aluminum. If a configuration in which the material of the positive electrode terminal 103 of the cell 100 is changed from aluminum to copper is adopted, the first end bus bar 301 may have a configuration in which the first joined portion 301a, the second joined portion 301b, and the protruding portion 301d are monolithically formed of copper.

### (Inter-cell Bus Bar 302: Bus Bar)

The inter-cell bus bar 302 is a bus bar. The inter-cell bus bar 302 is connected to the positive electrode terminal 103 of one cell 100 and the negative electrode terminal 104 of another cell 100. As depicted in Fig. 3, the inter-cell bus bars 302 electrically connect one cell 100 and another cell 100 that are adjacent to each other along the stacking direction X. As depicted in Fig. 3, the inter-cell bus bar 302 is joined to the positive electrode terminal 103 of one of the cells 100 adjacent to each other along the stacking direction X, and to the negative electrode terminal 104 of the other of the cells 100 adjacent to each other along the stacking direction X. As depicted in Figs. 4 to 9 and 21, the inter-cell bus bar 302 includes a first joined portion 302a, a second joined portion 302b, a coupling portion 302c, and a protruding portion 302d.

As depicted in Fig. 3, the first joined portion 302a of the inter-cell bus bar 302 is joined to the negative electrode terminal 104 of one of the adjacent cells 100. As depicted in Figs. 4, 8, and 9, the first joined portion 302a is formed into a plate shape. When the inter-cell bus bar 302 is formed of a clad material, for example, the first joined portion 302a is formed of copper.

As depicted in Figs. 4, 8, and 9, the second joined portion 302b of the inter-cell bus bar 302 is joined to the positive electrode terminal 103 of the other of the adjacent cells 100. The second joined portion 302b is formed into a plate shape. When the inter-cell bus bar 302 is formed of the clad material, for example, the second joined portion 302b is formed of aluminum.

As depicted in Figs. 4 and 9, the coupling portion 302c of the inter-cell bus bar 302 couples the first joined portion 302a and the second joined portion 302b. The coupling portion 302c is formed to project toward a direction away from the cell 100. The coupling portion 302c curves. The coupling portion 302c is formed into an inverted U-shape.

As depicted in Figs. 4 and 9, the protruding portion 302d of the inter-cell bus bar 302 is formed at an edge of the first joined portion 302a. The protruding portion 302d extends in the direction away from the cell 100. The protruding portion 302d is formed into a plate shape. The protruding portion 302d extends along the width direction Y and the height direction Z. The protruding portion 302d is formed monolithically with the first joined portion 302a. The protruding portion 302d is connected to the terminal 401 of the voltage sensing unit 400. The protruding portion 302d is formed of, for example, copper.

If a configuration in which the material of the negative electrode terminal 104 of the cell 100 is changed from copper to aluminum is adopted, the inter-cell bus bar 302 may have a configuration in which the first joined portion 302a, the second joined portion 302b, and the protruding portion 302d are monolithically formed of aluminum.

### (Second End Bus Bar 303: Bus Bar)

The second end bus bar 303 is a bus bar. The second end bus bar 303 is connected to the negative electrode terminal 104 of one cell 100 and is also connected to electrical equipment electrically connected to the external control equipment. The electrical equipment is, for example, a bus bar disposed in an electric vehicle. As depicted in Fig. 3, the second end bus bar 303 is joined to the negative electrode terminal 104 of the cell 100 that is one of the twenty stacked cells 100 and that is closest to the second end block 212. As depicted in Fig. 21, the second end bus bar 303 includes a first joined portion 303a with a plate shape, a second joined portion 303b with a plate shape, a coupling portion 303c with a curved shape, a protruding portion 303d, and an insertion hole 303e.

The first joined portion 303a of the second end bus bar 303 is joined to the negative electrode terminal 104 of the cell 100. To the second joined portion 303b, the electrical equipment (bus bar) electrically connected to the external control equipment is joined.

As depicted in Fig. 21, the protruding portion 303d of the second end bus bar 303 is formed at an edge of the first joined portion 303a. The protruding portion 303d extends in a direction away from the cell 100. The protruding portion 303d is formed into a plate shape. The protruding portion 303d is formed monolithically with the first joined portion 303a. The protruding portion 303d is connected to the terminal 401 of the voltage sensing unit 400.

As depicted in Fig. 21, the coupling portion 303c of the second end bus bar 303 couples the first joined portion 303a and the second joined portion 303b. The insertion hole 303e is formed in the second joined portion 303b. A fastening bolt is inserted into the insertion hole 303e. The second joined portion 303b is joined by the fastening bolt to the electrical equipment (bus bar) electrically connected to the external control equipment.

The second end bus bar 303 is formed of, for example, copper. Specifically, in the second end bus bar 303, the first joined portion 303a, the second joined portion 303b, and the protruding portion 303d are monolithically formed of copper. If a configuration in which the material of the negative electrode terminal 104 of the cell 100 is changed from copper to aluminum is adopted, the second end bus bar 303 may have a configuration in which the first joined portion 303a, the second joined portion 303b, and the protruding portion 303d are monolithically formed of aluminum.

### (Bus Bar Holder 311: Holding Member)

The bus bar holder 311 is a holding member that holds the first end bus bar 301, the inter-cell bus bars 302, and the second end bus bar 303. The bus bar holder 311 has insulation properties. The bus bar holder 311 is formed of, for example, resin. As depicted in Fig. 2, the bus bar holder 311 integrally holds the first end bus bar 301, the plurality of inter-cell bus bars 302, and the second end bus bar 303. Further, the bus bar holder 311 covers and insulates the plurality of stacked cells 100. As depicted in Figs. 4 to 9 and 21, the bus bar holder 311 includes a base portion 311M and projecting portions 311N.

The base portion 311M is located between the cells 100 and the inter-cell bus bars 302 and extends along the plurality of cells 100. The base portion 311M is located between the upper surfaces 100a of the cells 100 and the inter-cell bus bars 302. The base portion 311M extends along the stacking direction X and the width direction Y. As depicted in Figs. 4 to 9, the base portion 311M is formed into a plate shape. As depicted in Figs. 4 to 9 and 21, the base portion 311M includes openings 311a, holding portions 311b, and insertion portions 311c.

As depicted in Fig. 21, a plurality of openings 311a are formed in the base portion 311M. The respective openings 311a expose, toward the side of the cells 100, the first joined portions or second joined portions of the first end bus bar 301, the plurality of inter-cell bus bars 302, and the second end bus bar 303.

As depicted in Fig. 21, a plurality of holding portions 311b are formed on the base portion 311M. The respective holding portions 311b clamp and hold end portions of the first end bus bar 301, the plurality of inter-cell bus bars 302, and the second end bus bar 303. Each of the holding portions 311b is formed at an edge of the opening 311a.

As depicted in Fig. 21, a plurality of insertion portions 311c are formed in the base portion 311M. An electrical wire 502 of the temperature measurement unit 500 is inserted in each of the insertion portions 311c.

As depicted in Figs. 4 to 9 and 21, the projecting portions 311N are continuous with the base portion 311M. Each of the projecting portions 311N is formed into a plate shape. The projecting portion 311N extends in a direction away from the cell 100. The projecting portion 311N is formed monolithically with the base portion 311M. As depicted in Figs. 4 to 9 and 21, the projecting portion 311N includes a first wall portion 311d and the second wall portion 311e.

As depicted in Figs. 4 to 9, the first wall portion 311d of the projecting portion 311N is formed into a plate shape. The first wall portion 311d extends along the direction away from the cell 100 (height direction Z) and the width direction Y. The first wall portion 311d is adjacent to a first connection portion 400P of a harness 400A along the stacking direction X of the cell 100. The stacking direction X is a direction intersecting the height direction Z. A pair of first wall portions 311d are formed on the base portion 311M with the first connection portion 400P of the harness 400A interposed therebetween. In other words, the first connection portion 400P of the harness 400A is disposed between the pair of first wall portions 311d. The pair of first wall portions 311d do not interfere with the first connection portion 400P of the harness 400A along the direction away from the cell 100. To put it another way, the first wall portion 311d and the first connection portion 400P of the harness 400A are not arranged along the height direction Z. Thus, even if a positional deviation of the first connection portion 400P has occurred in the height direction Z, interference between the first connection portion 400P and the first wall portion 311d can be prevented or suppressed.

As depicted in Figs. 4 to 9, the second wall portion 311e of the projecting portion 311N is formed into a plate shape. The second wall portion 311e extends along the direction away from the cell 100 (height direction Z) and the width direction Y. The second wall portion 311e is adjacent to a second connection portion 400Q of the harness 400A along the stacking direction X of the cell 100. The second wall portion 311e extends beyond the second connection portion 400Q in the direction away from the cell 100. The second wall portion 311e extends beyond the first wall portion 311d in the direction away from the cell 100. That is, the protrusion height of the second wall portion 311e is greater than that of the first wall portion 311d.

The tip of the upper surface 311e1 of the second wall portion 311e of the projecting portion 311N is farthest from the cell 100 in the bus bar holder 311. The second wall portion 311e includes a curved portion. The upper surface 311e1 of the second wall portion 311e curves into a semicircular shape. The second wall portion 311e is formed continuously with the first wall portion 311d along the base portion 311M. A pair of second wall portions 311e are formed on the base portion 311M with the second connection portion 400Q of the harness 400A interposed therebetween. In other words, the second connection portion 400Q of the harness 400A is disposed between the pair of second wall portions 311e. The pair of second wall portion 311e do not interfere with the second connection portion 400Q of the harness 400A along the direction away from the cell 100. To put it another way, the second wall portion 311e and the second connection portion 400Q of the harness 400A are not arranged along the height direction Z. Thus, even if a positional deviation of the second connection portion 400Q has occurred in the height direction Z, interference between the second connection portion 400Q and the second wall portion 311e can be prevented or suppressed.

A pair of projecting portions 311N restrict the position of the harness 400A in the stacking direction X. For example, the pair of projecting portions 311N clamp the harness 400A from both sides in the stacking direction X. The pair of projecting portions 311N are not limited to such a configuration as to clamp the harness 400A. A predetermined gap may be made between the harness 400A and the projecting portion 311N. The predetermined gap is, for example, equal to or smaller than the width of the harness 400A in the stacking direction X. This can prevent or suppress the positional deviations of the first connection portion 400P and the second connection portion 400Q, which are end portions of the harness 400A, in the stacking direction X. The pair of projecting portions 311N can also be used to position the end portion of the harness 400A when it is attached to the bus bar.

### (Bus Bar Cover 312: Covering Member)

The bus bar cover 312 is a covering member. The bus bar cover 312 is formed into a plate shape. As depicted in Fig. 1, the bus bar cover 312 is facing the bus bar holder 311 and covers the inter-cell bus bars 302 and the like. The gap between the bus bar cover 312 and the second wall portion 311e is shorter than the thickness of the electrical wire 402 in the height direction Z. In an example depicted in Fig. 5, the bus bar cover 312 is in contact with the second wall portion 311e. That is, the gap between the bus bar cover 312 and the second wall portion 311e is 0 (zero). The gap between the bus bar cover 312 and the second wall portion 311e may be larger than 0 (zero). The bus bar cover 312 has insulation properties. The bus bar cover 312 is formed of, for example, resin.

### (Configuration of Voltage Sensing Unit 400)

The voltage sensing unit 400 depicted in Figs. 2 to 18 and 21 senses the voltage of the cell 100 on the basis of control by, for example, external control equipment. The voltage sensing unit 400 includes the harness 400A as depicted in Figs. 4 to 9 and 21. The harness 400A includes the terminal 401 and the electrical wire 402. The constituent components included in the voltage sensing unit 400 are described below.

The terminal 401 corresponds to a cell voltage sensing terminal. The terminal 401 has electrical conductivity. The terminal 401 is formed of, for example, a solderless terminal. As depicted in Figs. 4 to 9, the terminal 401 is joined to the protruding portion 302d of the inter-cell bus bar 302. As depicted in Figs. 6 and 7, the terminal 401 includes a first connection region 401a, a second connection region 401b, and a third connection region 401c along the width direction Y.

The first connection region 401a of the terminal 401 is connected to the inter-cell bus bar 302 by being crimped together with the protruding portion 302d of the inter-cell bus bar 302. The second connection region 401b is connected to the electrical wire 402 by being crimped together with a conductive wire 402a of the electrical wire 402. The third connection region 401c is connected to the electrical wire 402 by being crimped together with a sheath 402b of the electrical wire 402. An end portion 401d of the third connection region 401c is the boundary between a portion of the electrical wire 402 joined to the terminal 401 and a portion of the electrical wire 402 that is not joined to the terminal 401. The distance from the end portion 401d to an end portion of the second wall portion 311e (end portion of the projecting portion 311N) is set, for example, equal to or longer than the diameter of the electrical wire 402.

As depicted in Fig. 21, the terminal 401 is joined to the protruding portion 301d of the first end bus bar 301. As depicted in Fig. 21, the terminal 401 is joined to the protruding portion 303d of the second end bus bar 303.

As depicted in Figs. 4 to 9, the electrical wire 402 is crimped and connected to the terminal 401. The electrical wire 402 is formed to be deformable. The electrical wire 402 electrically connects the terminal 401 to external control equipment. As depicted in Figs. 6 and 7, the electrical wire 402 includes the conductive wire 402a and the sheath 402b that covers the outer circumference of the conductive wire 402a. The tip of the conductive wire 402a is exposed from the sheath 402b. The tip of the conductive wire 402a is crimped and connected to the second connection region 401b of the terminal 401. The sheath 402b is crimped and connected to the third connection region 401c of the terminal 401.

As depicted in Figs. 4 to 9, the harness 400A includes the first connection portion 400P and the second connection portion 400Q.

As depicted in Figs. 5, 7, and 8, the first connection portion 400P is, for example, a portion in which the inter-cell bus bar 302 and the terminal 401 are connected to each other in the harness 400A. The first connection portion 400P includes, in addition to the portion in which the terminal 401 and the inter-cell bus bar 302 are connected to each other, a portion adjacent to the portion in which the terminal 401 and the inter-cell bus bar 302 are connected to each other. As depicted in Fig. 7, the first connection portion 400P includes the first connection region 401a.

As depicted in Figs. 5, 7, and 8, the second connection portion 400Q is a portion in which the terminal 401 and the electrical wire 402 are connected to each other in the harness 400A. The second connection portion 400Q includes, in addition to the portion in which the terminal 401 and the electrical wire 402 are connected to each other, a portion adjacent to the portion in which the terminal 401 and the electrical wire 402 are connected to each other. As depicted in Fig. 7, the second connection portion 400Q includes the second connection region 401b, the third connection region 401c, and the end portion 401d.

The second connection portion 400Q is continuous with the first connection portion 400P along a direction along the base portion 311M. The direction along the base portion 311M is, for example, the width direction Y. In the second connection portion 400Q, the electrical wire 402 is crimped and connected to the terminal 401. The second connection portion 400Q and the electrical wire 402 include a portion extending along a direction along the base portion 311M. The direction along the base portion 311M is, for example, the width direction Y or the stacking direction X. The portion extending along the direction along the base portion 311M is a portion extending in parallel to the width direction Y or the stacking direction X. Alternatively, the portion extending along the direction along the base portion 311M is a portion extending while being inclined with respect to a plane parallel to the width direction Y or the stacking direction X.

### (Configuration of Temperature Measurement Unit 500)

The temperature measurement unit 500 depicted in Figs. 2, 3, and 21 measures the temperature of the cells 100 on the basis of control by, for example, external control equipment. As depicted in Fig. 3, the temperature measurement unit 500 includes temperature sensors 501 and the electrical wires 502. The constituent components included in the temperature measurement unit 500 are described below.

The temperature sensors 501 measure the temperature of the cells 100. As depicted in Fig. 3, as an example, the temperature sensors 501 are joined to the lids 102 of the cells 100 that are located as the seventh and fourteenth cells in a direction from the first end block 211 toward the second end block 212.

The electrical wires 502 are attached to the temperature sensors 501 as depicted in Fig. 3. The electrical wires 502 electrically connect the temperature sensors 501 to external control equipment.

### (Configuration of Bus Bar Unit 300 According to Modification 1 of Embodiment)

A configuration of the bus bar unit 300 according to a modification 1 of the embodiment is described with reference to Fig. 12. Fig. 12 is a side view depicting a major part of a battery pack according to the modification 1 of the embodiment.

In the bus bar unit 300, a bus bar cover 322 has a projecting portion 322a protruding toward the bus bar holder 311. The bus bar cover 322 is a covering member. The projecting portion 322a has a top surface in contact with the upper surface 311e1 of the second wall portion 311e. In the embodiment, the top surface corresponds to the lower surface of the bus bar holder 311. The projecting portion 322a has a recessed surface that is a surface opposite to the top surface and that hollows toward the bus bar holder 311. In the embodiment, the surface opposite to the top surface corresponds to the upper surface of the bus bar holder 311.

The top surface of the projecting portion 322a may not be in contact with the upper surface 311e1 of the second wall portion 311e. In this case, it is preferable that the gap between the top surface of the projecting portion 322a and the upper surface 311e1 of the second wall portion 311e be shorter than the thickness of the electrical wire 402. The projecting portion 322a may be formed as a separate member that can be attached to a bus bar cover having a flat plate shape.

### (Configuration of Bus Bar Unit 600 According to Modification 2 of Embodiment)

A configuration of a bus bar unit 600 according to a modification 2 of the embodiment is described with reference to Fig. 13. Fig. 13 is a perspective view depicting a major part of a battery pack according to the modification 2 of the embodiment.

In the bus bar unit 600, a bus bar holder 611 (holding member) includes the base portion 311M and projecting portions 611N. Each of the projecting portions 611N includes the first wall portion 311d and a second wall portion 611e.

An upper surface 611e1 of the second wall portion 611e is inclined with respect to an upper surface 311d1 of the first wall portion 311d. The upper surface 611e1 of the second wall portion 611e is inclined with respect to the base portion 311M. The upper surface 611e1 is linearly inclined to become higher in the height direction Z from an end side toward the center of the cell 100 in the width direction Y. The end side of the cell 100 in the width direction Y is a portion at which the positive electrode terminal 103 or the negative electrode terminal 104 depicted in Fig. 20 is located. The center of the cell 100 in the width direction Y is, for example, a portion at which the safety valve 105 depicted in Fig. 20 is located. The upper surface 611e1 becomes higher in the height direction Z from a position where it is in contact with the first wall portion 311d, along a direction away from the first wall portion 311d in the width direction Y. The position where the upper surface 611e1 is in contact with the first wall portion 311d is the position of the boundary between the first wall portion 311d and the second wall portion 311e. The upper surface 611e1 is linearly inclined.

The upper surface 611e1 may be curved while being inclined. In this case, the upper surface 611e1 may be curved in such a manner as to be expanded into a projecting shape toward a direction away from the cell 100, or may be curved in such a manner as to be hollowed into a recessed shape toward such a direction as to come closer to the cell 100. Further, the upper surface 611e1 may be inclined partly.

### (Configuration of Bus Bar Unit 700 According to Modification 3 of Embodiment)

A configuration of a bus bar unit 700 according to a modification 3 of the embodiment is described with reference to Fig. 14. Fig. 14 is a perspective view depicting a major part of a battery pack according to the modification 3 of the embodiment.

In the bus bar unit 700, a bus bar holder 711 (holding member) includes the base portion 311M and projecting portions 711N. Each of the projecting portions 711N includes the first wall portion 311d and a second wall portion 711e.

An upper surface 711e1 of the second wall portion 711e is inclined with respect to the upper surface 311d1 of the first wall portion 311d. The upper surface 711e1 of the second wall portion 711e is inclined with respect to the base portion 311M. The upper surface 711e1 is linearly inclined to become higher in the height direction Z from the center toward the end side of the cell 100 in the width direction Y. The center of the cell 100 in the width direction Y is, for example, a portion at which the safety valve 105 depicted in Fig. 20 is located. The end side of the cell 100 in the width direction Y is a portion at which the positive electrode terminal 103 or the negative electrode terminal 104 depicted in Fig. 20 is located. The upper surface 711e1 becomes lower in the height direction Z from a position where it is in contact with the first wall portion 311d, along a direction away from the first wall portion 311d in the width direction Y. The position where the upper surface 711e1 is in contact with the first wall portion 311d is the position of the boundary between the first wall portion 311d and the second wall portion 311e. The upper surface 711e1 is linearly inclined.

The upper surface 711e1 may be curved while being inclined. In this case, the upper surface 711e1 may be curved in such a manner as to be expanded into a projecting shape toward a direction away from the cell 100, or may be curved in such a manner as to be hollowed into a recessed shape toward such a direction as to come closer to the cell 100. Moreover, the upper surface 711e1 may be inclined partly.

### (Configuration of Bus Bar Unit 800 According to Modification 4 of Embodiment)

A configuration of a bus bar unit 800 according to a modification 4 of the embodiment is described with reference to Fig. 15. Fig. 15 is a perspective view depicting a major part of a battery pack according to the modification 4 of the embodiment.

In the bus bar unit 800, a bus bar holder 811 (holding member) includes the base portion 311M and projecting portions 811N. Each of the projecting portions 811N includes the first wall portion 311d and a second wall portion 811e.

An upper surface 811e1 of the second wall portion 811e is higher in the height direction Z than the upper surface 311d1 of the first wall portion 311d. The upper surface 811e1 is formed in parallel to the upper surface 311d1 of the first wall portion 311d. The upper surface 811e1 is formed in parallel to the base portion 311M.

### (Configuration of Bus Bar Unit 900 According to Modification 5 of Embodiment)

A configuration of a bus bar unit 900 according to a modification 5 of the embodiment is described with reference to Fig. 16. Fig. 16 is a perspective view depicting a major part of a battery pack according to the modification 5 of the embodiment.

In the bus bar unit 900, a bus bar holder 911 (holding member) includes the base portion 311M and projecting portions 911N. Each of the projecting portions 911N includes a pair of first wall portions 311d and 911d and the pair of second wall portions 311e.

The pair of first wall portions 311d and 911d are formed on the base portion 311M with the second connection portion 400Q of the harness 400A interposed therebetween. The first wall portion 311d and the first wall portion 911d are aligned in parallel along the width direction Y in a state in which they are separate from each other. The first wall portion 311d is facing the inter-cell bus bar 302 along the width direction Y. The first wall portion 911d is not facing the inter-cell bus bar 302 along the width direction Y. The first wall portion 911d is facing the whole region of the first connection portion 400P along the stacking direction X. The first wall portion 911d is facing a partial region of the inter-cell bus bar 302 along the stacking direction X. The first wall portion 911d has a long length along the width direction Y compared with the first wall portion 311d. An upper surface 911d1 of the first wall portion 911d has a long length along the width direction Y compared with the upper surface 311d1 of the first wall portion 311d.

### (Configuration of Bus Bar Unit 1000 According to Modification 6 of Embodiment)

A configuration of a bus bar unit 1000 according to a modification 6 of the embodiment is described with reference to Fig. 17. Fig. 17 is a perspective view depicting a major part of a battery pack according to the modification 6 of the embodiment.

In the bus bar unit 1000, a bus bar holder 1011 (holding member) includes the base portion 311M and projecting portions 1011N. The first wall portion 311d and the second wall portion 311e of the projecting portion 1011N are formed on the base portion 311M in such a manner as to be adjacent to a single side of the harness 400A.

In the above-described embodiment, the pair of projecting portions 311N (see Fig. 8) are disposed for each bus bar. In the present modification, as depicted in Fig. 17, only one of the pair of projecting portions 1011N that is on the side of an insertion opening for the harness 400A made in the bus bar cover 312 is disposed. The electrical wire 402 includes a portion extending along the projecting portion 1011N and a portion that bends from the above portion toward the side of the projecting portion 1011N and that extends along the stacking direction X. The electrical wire 402 is led out to the outside of the battery pack 1 from the insertion opening in the bus bar cover 312. The projecting portion 1011N has a configuration that supports the electrical wire 402 in the stacking direction X, and thus a load applied to the connection portion between the terminal 401 and the electrical wire 402 can be reduced.

### (Configuration of Bus Bar Unit 1100 According to Modification 7 of Embodiment)

A configuration of a bus bar unit 1100 according to a modification 7 of the embodiment is described with reference to Fig. 18. Fig. 18 is a perspective view depicting a major part of a battery pack according to the modification 7 of the embodiment.

In the bus bar unit 1100, a bus bar holder 1111 (holding member) includes the base portion 311M and projecting portions 1111N. The first wall portion 311d and the second wall portion 311e of the projecting portion 1111N are formed on the base portion 311M in such a manner as to be adjacent to a single side of, for example, every second harness 400A, i.e., each of half of the harnesses 400A, among the harnesses 400A adjacent to one another along the stacking direction X. As the harnesses 400A aligned along the stacking direction X, the harnesses 400A to which the projecting portion 1111N is adjacent and the harnesses 400A to which the projecting portion 1111N is not adjacent are alternately present along the stacking direction. That is, the projecting portions 1111N are disposed in such a manner as to be thinned out with respect to the harnesses 400A aligned along the stacking direction X. The projecting portion 1111N may be formed on the base portion 311M in such a manner as to be adjacent to a single side of every third harness 400A or each of the harnesses 400A at longer intervals among the harnesses 400A adjacent to one another along the stacking direction X.

Here, the possibility of damage or the like to the harness 400A is higher at a place closer to the insertion opening in the bus bar cover 312. This is because, at the place closer to the insertion opening, the electrical wires 402 aggregate and are stacked up in the height direction Z to a larger extent. Thus, it is preferable to dispose the projecting portion 1111N for at least the connection portion between the bus bar closest to the insertion opening in the bus bar cover 312 and the harness 400A.

### (Effects of Battery Pack 1 According to Embodiment)

Effects of the battery pack 1 according to the embodiment are described.

The description is given with use of the inter-cell bus bar 302 as an example of the bus bar among the first end bus bar 301, the inter-cell bus bar 302, and the second end bus bar 303.
(1) The first wall portion 311d and the second wall portion 311e are adjacent to the harness 400A. It is sufficient for the first wall portion 311d and the second wall portion 311e to be adjacent to any one or more of the plurality of harnesses 400A. The second wall portion 311e extends beyond the second connection portion 400Q in the direction away from the cell 100. It is sufficient for the second wall portion 311e to include a portion extending beyond the second connection portion 400Q in the direction away from the cell 100.

According to such a configuration, the second wall portion 311e can be brought into contact with any component before the harness 400A interferes with this component. That is, according to such a configuration, the interference of the harness 400A with any component can be prevented or suppressed. According to such a configuration, the interference of the harness 400A with any component particularly along the height direction Z can be prevented or suppressed. Any component may be a component of the battery pack 1 or may be a different component from the battery pack 1. The different component from the battery pack 1 is, for example, a component of a vehicle equipped with the battery pack 1, or a tool or a manufacturing facility used when the battery pack 1 is mounted in the vehicle. The manufacturing facility is, for example, a transportation apparatus for the battery pack 1. Due to this feature, the battery pack 1 allows sufficient protection of the harness 400A connected to the inter-cell bus bar 302.

In the battery pack 1, as depicted in Figs. 6 and 7, the second wall portion 311e is facing the end portion 401d of the terminal 401 along a direction intersecting the height direction Z. The end portion 401d is the boundary between the portion of the electrical wire 402 joined to the terminal 401 and the portion of the electrical wire 402 that is not joined to the terminal 401. With the second wall portion 311e provided, it is possible to prevent or suppress the occurrence of a situation in which the end portion 401d or a portion around the end portion 401d interferes with any component and the electrical wire 402 is disconnected.

(12) The battery pack 1 further has the bus bar cover 312 (covering member) that faces the bus bar holder 311 (holding member) and that covers the inter-cell bus bar 302.

According to such a configuration, the second wall portion 311e can be brought into contact with the bus bar cover 312 before the harness 400A interferes with the bus bar cover 312. That is, according to such a configuration, the interference of the harness 400A with the bus bar cover 312 can be prevented or suppressed. According to such a configuration, the interference of the harness 400A with the bus bar cover 312 particularly along the height direction Z can be prevented or suppressed. The bus bar cover 312 is facing the bus bar holder 311 along the height direction Z. Therefore, the battery pack 1 allows sufficient protection of the harness 400A connected to the inter-cell bus bar 302.

(13) The gap between the bus bar cover 312 and the second wall portion 311e is shorter than the thickness of the electrical wire 402.

According to such a configuration, the length of the battery pack 1 in the height direction Z can be made relatively short. Because the size of the battery pack 1 can be made small, the work efficiency of attachment of the battery pack 1 to a vehicle or the like improves. Further, the disposition space of the battery pack 1 with respect to the vehicle or the like becomes small, and thus, an interior space of the vehicle or the like can be made wide.

In addition, according to such a configuration, although a load is applied to the electrical wire 402 if the electrical wire 402 is caught in the gap between the bus bar cover 312 and the second wall portion 311e, by employing a curved surface or an inclined surface as the upper surface 311e1 of the second wall portion 311e, the harness 300A can be prevented from being caught between the bus bar cover 312 and the second wall portion 311e through moving the harness 400A downward along the upper surface 311e1 of the second wall portion 311e when the bus bar cover 312 is assembled. Due to this, the second wall portion 311e can be brought into contact with the bus bar cover 312 before the harness 400A interferes with the bus bar cover 312. That is, according to such a configuration, the interference of the harness 400A with the bus bar cover 312 can be prevented or suppressed. Therefore, the battery pack 1 allows sufficient protection of the harness 400A connected to the inter-cell bus bar 302. In work of routing the harness 400A over the bus bar holder 311 and work of attaching the bus bar cover 312 to the bus bar holder 311 over which the harness 400A has been routed, damage to the harness 400A can be prevented or suppressed. Thus, these kinds of work can be executed easily.

Moreover, according to such a configuration, it is possible to prevent or suppress the occurrence of a situation in which, after the battery pack 1 is attached to a vehicle or the like, the harness 400A passes between the second wall portion 311e and the bus bar cover 312 and moves to, for example, the side of the inter-cell bus bar 302 relative to the second wall portion 311e due to vibration. As a result, it is possible to prevent or suppress the occurrence of a situation in which, after the battery pack 1 is attached to the vehicle or the like, the harness 400A comes in contact with a corner portion or the like of a fitting piece that connects the electrical wire 402 to the bus bar and the harness 400A is damaged. In the embodiment, the corner portion of the fitting piece is, for example, an end portion of the second connection region 401b or a corner portion of the terminal 401 between the first connection region 401a and the second connection region 401b.

(14) The bus bar cover 312 is in contact with the second wall portion 311e.

According to such a configuration, the length of the battery pack 1 in the height direction Z can be made relatively sufficiently short. Because the size of the battery pack 1 can be made small, the work efficiency of attachment of the battery pack 1 to a vehicle or the like improves. Moreover, the disposition space of the battery pack 1 with respect to the vehicle or the like becomes small, and thus, an interior space of the vehicle or the like can be made wide.

According to such a configuration, although a relatively high load is applied to the electrical wire 402 if the electrical wire 402 is caught in the gap between the bus bar cover 312 and the second wall portion 311e, by employing a curved surface or an inclined surface as the upper surface 311e1 of the second wall portion 311e, the harness 300A can be prevented from being caught between the bus bar cover 312 and the second wall portion 311e through moving the harness 400A downward along the upper surface 311e1 of the second wall portion 311e when the bus bar cover 312 is assembled. Due to this, the second wall portion 311e can be brought into contact with the bus bar cover 312 before the harness 400A interferes with the bus bar cover 312. That is, according to such a configuration, the interference of the harness 400A with the bus bar cover 312 can be prevented or suppressed. Therefore, the battery pack 1 allows sufficient protection of the harness 400A connected to the inter-cell bus bar 302. In work of routing the harness 400A over the bus bar holder 311 and work of attaching the bus bar cover 312 to the bus bar holder 311 over which the harness 400A has been routed, damage to the harness 400A can be prevented or suppressed. Thus, these kinds of work can be executed easily.

Further, according to such a configuration, it is possible to prevent or suppress the occurrence of a situation in which, after the battery pack 1 is attached to a vehicle or the like, the harness 400A passes between the second wall portion 311e and the bus bar cover 312 and moves to, for example, the side of the inter-cell bus bar 302 relative to the second wall portion 311e due to vibration. As a result, it is possible to prevent or suppress the occurrence of a situation in which, after the battery pack 1 is attached to the vehicle or the like, the harness 400A comes in contact with a corner portion (for example, an end portion of the second connection region 401b or a corner portion of the terminal 401 between the first connection region 401a and the second connection region 401b) or the like of a fitting piece that connects the electrical wire 402 to the bus bar and the harness 400A is damaged.

(2) The second wall portion 311e includes a portion extending beyond the first wall portion 311d in the direction away from the cell 100.

According to such a configuration, the second wall portion 311e can be brought into contact with any component before the first wall portion 311d interferes with this component. Therefore, according to such a configuration, the first connection portion 400P protected by the first wall portion 311d can sufficiently be protected.

(3) The second connection portion 400Q and the electrical wire 402 include a portion extending along a direction along the base portion 311M.

According to such a configuration, the second wall portion 311e can be brought into contact with any component when the second connection portion 400Q and the electrical wire 402 have come relatively close to this component along a direction (height direction Z) intersecting the portion extending along the direction along the base portion 311M. That is, according to such a configuration, the second connection portion 400Q and the electrical wire 402 can be protected by the second wall portion 311e.

(4) The electrical wire 402 is formed to be deformable.

According to such a configuration, the interference of the electrical wire 402 with any component can be prevented or suppressed by the second wall portion 311e even when the electrical wire 402 is deformed.

(5) The electrical wire 402 is crimped and connected to the terminal 401 in the second connection portion 400Q.

According to such a configuration, the interference of the electrical wire 402 crimped and connected to the terminal 401 with any component can be prevented or suppressed by the second wall portion 311e.

(6) The second wall portion 311e includes a portion farthest from the cell 100 in the bus bar holder 311.

According to such a configuration, the second wall portion 311e is allowed to have the highest likelihood of contact with any component before the interference of the harness 400A with this component in the bus bar holder 311. That is, according to such a configuration, the interference of the harness 400A protected by the second wall portion 311e with any component can be prevented or suppressed.

(7) A pair of second wall portions 311e are formed on the base portion 311M with the second connection portion 400Q of the harness 400A interposed therebetween.

According to such a configuration, the second connection portion 400Q of the harness 400A can be clamped by the pair of second wall portions 311e. The configuration in which the second connection portion 400Q is clamped by the pair of second wall portions 311e is a configuration in which the second connection portion 400Q is held by the pair of second wall portions 311e, but is not a configuration in which the second connection portion 400Q is fixed by the pair of second wall portions 311e. That is, according to such a configuration, the second connection portion 400Q of the harness 400A can be protected from both sides by the pair of second wall portions 311e. Moreover, the pair of second wall portions 311e can relatively enhance the rigidity. Therefore, the pair of second wall portions 311e can easily keep their outer shape when contact with any component is made. That is, the second connection portion 400Q of the harness 400A can be protected by the second wall portions 311e.

By pinching and compressing the harness 400A by the pair of second wall portions 311e, the displacement of the position of the harness 400A which is caused by vibration of a vehicle or the like can be suppressed. As a result, it is possible to prevent damage to another electrical wire 402 which is caused by contact between a fitting piece that connects a predetermined electrical wire 402 to a predetermined bus bar and the other electrical wire 402. It is to be noted that the pair of second wall portions 311e may not be in contact with the harness 400A. For example, the length of the gap between the pair of second wall portions 311e is equal to or shorter than five to ten times the diameter of the electrical wire 402. The length of the gap between the pair of second wall portions 311e corresponds to the length in the stacking direction X in the embodiment. In terms of positioning of the electrical wire 402, it is preferable that the length of the gap between the pair of second wall portions 311e be set equal to or shorter than twice the diameter of the electrical wire 402.

(8) The second wall portion 311e is separate from the second connection portion 400Q of the harness 400A along a direction away from the cell 100.

According to such a configuration, even when the second connection portion 400Q of the harness 400A moves in such a direction as to get farther away from or come closer to the cell 100, the interference thereof with the second wall portion 311e can be prevented or suppressed.

(9) The second wall portion 311e includes a curved portion or a portion inclined with respect to the base portion 311M.

According to such a configuration, even if the electrical wire 402 of the harness 400A is located between the second wall portion 311e and any component, the electrical wire 402 pressed by this component can smoothly be moved along the curved portion or the inclined portion of the second wall portion 311e. That is, according to such a configuration, the electrical wire 402 of the harness 400A can be prevented or inhibited from being caught between the second wall portion 311e and any component.

(10) The second wall portion 311e is formed continuously with the first wall portion 311d along the base portion 311M.

The second wall portion 311e can relatively enhance the rigidity due to the continuation with the first wall portion 311d. Therefore, the second wall portion 311e can easily keep its outer shape when contact with any component is made. That is, the second connection portion 400Q of the harness 400A can be protected by the second wall portion 311e.

(11) The inter-cell bus bar 302 includes the protruding portion 302d extending in the direction away from the cell 100. The protruding portion 302d is connected to the terminal 401.

According to such a configuration, the inter-cell bus bar 302 can easily be connected to the terminal 401.

(15) The battery pack 1 has a plurality of electrical wires 402 as depicted in Fig. 10. The plurality of electrical wires 402 overlap with each other along the direction away from the cell 100. The direction away from the cell 100 is the height direction Z in the embodiment.

When the plurality of electrical wires 402 overlap in the height direction Z, the electrical wire 402 disposed on the upper side is disposed at a position close to the bus bar cover 312. The tip of the second wall portion 311e is located on the side of the bus bar cover 312 relative to the electrical wire 402 disposed on the uppermost side. The tip of the second wall portion 311e is the upper end along the height direction in the embodiment. Thus, the second wall portion 311e can be brought into contact with any component before the plurality of electrical wires 402 disposed in an overlapping state in the height direction Z interfere with this component. That is, according to such a configuration, the interference of the plurality of electrical wires 402 with any component can be prevented or suppressed.

In the bus bar cover 312, insertion openings that are openings through which the plurality of electrical wires 402 are inserted are formed. The number of insertion openings is smaller than the number of electrical wires 402. For example, two insertion openings are made in the bus bar cover 312. Bundled ten or eleven or more electrical wires 402 are inserted through one insertion opening. The plurality of electrical wires 402 are led out from the bus bar cover 312 in the bundled state. This can prevent complicated disposition of the electrical wires 402 that connect the battery pack 1 to external control equipment.

(16) In the battery pack 1, as depicted in Fig. 11, for example, another electrical wire 403 different from the predetermined electrical wire 402 connected to the inter-cell bus bar 302 is sometimes present. The other electrical wire 403 is an electrical wire connected to a bus bar different from the predetermined inter-cell bus bar 302. The configuration of the electrical wire 403 is similar to that of the electrical wire 402. The other electrical wire 403 is located on the side of the inter-cell bus bar 302 relative to the tip of the upper surface 311e1 of the second wall portion 311e that holds the electrical wire 402. The electrical wire 403 is located over the upper surface 311d1 of the first wall portion 311d. The tip of the upper surface 311e1 of the second wall portion 311e is located on the side of the bus bar cover 312 relative to the electrical wire 403. The tip of the second wall portion 311e is the upper end along the height direction in the embodiment. Thus, the second wall portion 311e can be brought into contact with the bus bar cover 312 before the electrical wire 403 located on the upper side of the first wall portion 311d interferes with the bus bar cover 312. That is, according to such a configuration, the interference of the electrical wire 403 with the bus bar cover 312 can be prevented or suppressed.

The electrical wire 402 has a length with an allowance in view of the attachment work efficiency. Thus, the electrical wire 402 is sometimes routed not in a linearly extending state but in a meandering state. In this case, as depicted in Fig. 11, part of the electrical wire 403 is sometimes located, for example, on the side of the inter-cell bus bar 302 relative to the second wall portion 311e. If the first wall portion 311d is not present, there is a possibility that the electrical wire 403 comes in contact with a fitting piece or the like that connects the electrical wire 402 to, for example, the inter-cell bus bar 302, and is damaged. In contrast, in the present embodiment, the first wall portion 311d continuous with the second wall portion 311e extends along the width direction Y. Thus, the electrical wire 403 can be prevented from coming in contact with the fitting piece or the like that connects the electrical wire 402 to, for example, the inter-cell bus bar 302. As a result, damage to the electrical wire 403 is prevented.

The electrical wire 403 is located on the side of the inter-cell bus bar 302 relative to the tip of the upper surface 311e1 of the second wall portion 311e that holds the electrical wire 402. Meanwhile, even when the other electrical wire 403 is located on the side more separate from the inter-cell bus bar 302 than the tip of the upper surface 311e1 of the second wall portion 311e that holds the electrical wire 402, the interference of the electrical wire 403 with the bus bar cover 312 can be prevented or suppressed.

### (Battery Pack According to Other Embodiments)

The battery pack according to the present invention is not limited to the configuration of the battery pack described in the embodiment and can be configured as appropriate on the basis of the details described in the scope of claims.

The embodiment has been described in detail or simply in order to explain the present invention in an easy-to-understand manner, and is not necessarily required to include all configurations described or may include a configuration that is not depicted herein. Further, part of configuration of the embodiment may be deleted, replaced by a configuration of another embodiment, or combined with a configuration of another embodiment.

The number of cells 100 included in the battery pack 1 is not limited to twenty. The number of cells 100 may be, for example, two to nineteen, or twenty-one or more. The cell 100 is not limited to the lithium-ion battery. For example, a nickel-metal hydride battery or a lead battery can be applied to the cell 100. The cell 100 is not limited to the secondary battery. For example, a primary battery can be applied to the cell 100.

### Description of Reference Characters

1: Battery pack
100: Cell
101: Container
102: Lid
103: Positive electrode terminal (electrode terminal)
104: Negative electrode terminal (electrode terminal)
105: Safety valve
200: Holding unit
201: First end spacer
202: Cell spacer
203: Second end spacer
211: First end block
212: Second end block
221: Insulating member
222: Insert nut
231: First side plate
232: Second side plate
241: Fastening bolt
300: Bus bar unit
301: First end bus bar (bus bar)
301a: First joined portion
301b: Second joined portion
301c: Coupling portion
301d: Protruding portion
301e: Insertion hole
302: Inter-cell bus bar (bus bar)
302a: First joined portion
302b: Second joined portion
302c: Coupling portion
302d: Protruding portion
303: Second end bus bar (bus bar)
303a: First joined portion
303b: Second joined portion
303c: Coupling portion
303d: Protruding portion
303e: Insertion hole
311: Bus bar holder (holding member)
311M: Base portion
311N: Projecting portion
311a: Opening
311b: Holding portion
311c: Insertion portion
311d: First wall portion
311d1: Upper surface
311e: Second wall portion
311e1: Upper surface
312: Bus bar cover (covering member)
322: Bus bar cover (covering member)
322a: Projecting portion
400: Voltage sensing unit
400A: Harness
400P: First connection portion
400Q: Second connection portion
401: Terminal
401a: First connection region
401b: Second connection region
401c: Third connection region
401d: End portion
402: Electrical wire
403: (another) Electrical wire
402a: Conductive wire
402b: Sheath
500: Temperature measurement unit
501: Temperature sensor
502: Electrical wire
600: Bus bar unit
611: Bus bar holder (holding member)
611N: Projecting portion
611e: Second wall portion
611e1: Upper surface
700: Bus bar unit
711: Bus bar holder (holding member)
711N: Projecting portion
711e: Second wall portion
711e1: Upper surface
800: Bus bar unit
811: Bus bar holder (holding member)
811N: Projecting portion
811e: Second wall portion
811e1: Upper surface
900: Bus bar unit
911: Bus bar holder
911d: First wall portion
911d1: Upper surface
911N: Projecting portion
1000: Bus bar unit
1011: Bus bar holder (holding member)
1011N: Projecting portion
1100: Bus bar unit
1111: Bus bar holder (holding member)
1111N: Projecting portion
X: Stacking direction
Y: Width direction
Z: Height direction

## Claims

1. A battery pack comprising:
a plurality of cells each including electrode terminals;
a bus bar that is connected to one of the electrode terminals of one of the cells and one of the electrode terminals of another one of the cells or is connected to one of the electrode terminals of one of the cells and external electrical equipment;
a harness that includes a terminal connected to the bus bar and an electrical wire connected to the terminal; and
a holding member that holds the bus bar, wherein
the holding member includes
a base portion that is located between the cell and the bus bar and extends along the plurality of cells, and
a projecting portion that is continuous with the base portion and extends in a direction away from the cell,
the harness includes
a first connection portion in which the bus bar and the terminal are connected to each other, and
a second connection portion in which the terminal and the electrical wire are connected to each other, the second connection portion being continuous with the first connection portion,
the projecting portion includes
a first wall portion adjacent to the first connection portion along a direction intersecting the direction away from the cell, and
a second wall portion adjacent to the second connection portion along the direction intersecting the direction away from the cell,
the first wall portion and the second wall portion are adjacent to any one or more of a plurality of the harnesses, and
the second wall portion includes a portion extending beyond the second connection portion in the direction away from the cell.

2. The battery pack according to claim 1, wherein
the second wall portion includes a portion extending beyond the first wall portion in the direction away from the cell.

3. The battery pack according to claim 1, wherein
the second connection portion and the electrical wire include a portion extending along a direction along the base portion.

4. The battery pack according to claim 1, wherein
the electrical wire is formed to be deformable.

5. The battery pack according to claim 1, wherein
the electrical wire is crimped and connected to the terminal in the second connection portion.

6. The battery pack according to claim 1, wherein
the second wall portion includes a portion farthest from the cell in the holding member.

7. The battery pack according to claim 1, wherein
a pair of the second wall portions are formed on the base portion with the second connection portion of the harness interposed therebetween.

8. The battery pack according to claim 7, wherein
the second wall portion is separate from the second connection portion of the harness along the direction away from the cell.

9. The battery pack according to claim 1, wherein
the second wall portion includes a curved portion or a portion inclined with respect to the base portion.

10. The battery pack according to claim 1, wherein
the second wall portion is formed continuously with the first wall portion along the base portion.

11. The battery pack according to claim 1, wherein
the bus bar includes a protruding portion extending in the direction away from the cell, and
the protruding portion is connected to the terminal.

12. The battery pack according to claim 1, further comprising:
a covering member that faces the holding member and covers the bus bar.

13. The battery pack according to claim 12, wherein
a gap between the covering member and the second wall portion is shorter than a thickness of the electrical wire.

14. The battery pack according to claim 12, wherein
the covering member is in contact with the second wall portion.

15. The battery pack according to claim 1, including:
a plurality of the electrical wires, wherein
the plurality of electrical wires overlap with each other along the direction away from the cell.

16. The battery pack according to claim 1, further comprising:
another electrical wire different from the electrical wire, wherein
the other electrical wire is located on a side of the bus bar relative to the second wall portion.
